# EUROPEAN PATENT APPLICATION

(11) **EP 4 517 936 A1**
(43) Date of publication of application: **05.03.2025**
(21) Application number: 24193386.0
(22) Date of filing: 07.08.2024
(51) Int. Cl.: H01M 10/625, H01M 10/63, H01M 10/637, H02J 7/00, H01M 10/42

(54) **ENERGY STORAGE APPARATUS AND ENERGY STORAGE SYSTEM**

(30) Priority: 22.08.2023 CN 202311070281
(71) Applicant: Huawei Digital Power Technologies Co., Ltd., Shenzhen, Guangdong 518043 (CN)
(72) Inventor: WU, Qi, Shenzhen, 518043 (CN); WU, Yihong, Shenzhen, 518043 (CN); MENG, Yuandong, Shenzhen, 518043 (CN); GUO, Haibin, Shenzhen, 518043 (CN); HE, Ye, Shenzhen, 518043 (CN)
(74) Representative: Gill Jennings & Every LLP

(57) **Abstract**

Embodiments of this application disclose an energy storage apparatus and an energy storage system. The energy storage apparatus includes a cell and a heating circuit. The heating circuit includes a heating resistor and a switch. The heating resistor and the switch are configured to be connected in series to a power supply loop. The switch in the heating circuit is controlled to be on and off, so that the heating resistor is intermittently connected to and disconnected from the power supply loop. Specifically, the switch may control, based on a power supply voltage provided by the power supply loop, turn-on time and turn-off time of a line between the power supply loop and the heating resistor in each switching cycle, to dynamically adjust an average heating power of the heating circuit.

## Description

### TECHNICAL FIELD

This application relates to the field of battery technologies, and in particular, to an energy storage apparatus and an energy storage system.

### BACKGROUND

As a proportion of new energy increases, configuration of an energy storage system becomes increasingly important. The energy storage system is used for frequency adjustment and peak load adjustment of a power grid by controlling charging and discharging. A main operating component of the energy storage system is a battery. Performance of the battery directly affects a battery life, safety, and reliability of the energy storage system. In a low-temperature environment, a power characteristic of the battery deteriorates, a cycle life of the battery decreases, and an available capacity of the battery decreases. In particular, when the battery is charged in the low-temperature environment, a loss of the battery is large, and the battery needs to be heated when necessary. A low-temperature heating technology is one of core technologies of a battery thermal management system, and is a key to alleviate performance deterioration of the battery in the low-temperature environment.

### SUMMARY

This application provides an energy storage apparatus and an energy storage system, to implement a battery heating function of the energy storage apparatus.

According to a first aspect, an embodiment of this application provides an energy storage apparatus. The energy storage apparatus includes a cell and a heating circuit. The heating circuit includes a heating resistor and a switch. The heating resistor and the switch are configured to be connected in series to a power supply loop. The power supply loop may be a power conversion system connected to the cell, or may be another power supply loop that is in the energy storage apparatus and that is connected to the cell. The power supply loop is configured to provide a power supply voltage. The switch in the heating circuit is controlled to be on and off, so that the heating resistor is intermittently connected to and disconnected from the power supply loop. Specifically, the switch may control, based on the power supply voltage, turn-on time and turn-off time of a line between the power supply loop and the heating resistor in each switching cycle, to dynamically adjust an average heating power of the heating circuit.

In some embodiments of this application, when it is determined that the power supply voltage increases, the switch may decrease a ratio of the turn-on time to the turn-off time of the line between the power supply loop and the heating resistor in the switching cycle, so that the average heating power of the heating circuit fluctuates within a specific numerical range, that is, the average heating power may be considered to be fixed. When it is determined that the power supply voltage decreases, the switch may increase a ratio of the turn-on time to the turn-off time of the line between the power supply loop and the heating resistor in the switching cycle, so that the average heating power of the heating circuit fluctuates within a specific numerical range, that is, the average heating power may be considered to be fixed.

In some embodiments of this application, when it is determined that the power supply voltage is fixed, the switch may increase a ratio of the turn-on time to the turn-off time of the line between the power supply loop and the heating resistor in the switching cycle, to increase the average heating power of the heating circuit. This implements a function of dynamically adjusting the average heating power of the heating circuit. When it is determined that the power supply voltage is fixed, the switch may alternatively decrease a ratio of the turn-on time to the turn-off time of the line between the power supply loop and the heating resistor in the switching cycle, to decrease the average heating power of the heating circuit. This implements a function of dynamically adjusting the average heating power of the heating circuit.

In some embodiments of this application, when it is determined that the power supply voltage decreases, the switch may decrease a ratio of the turn-on time to the turn-off time of the line between the power supply loop and the heating resistor in the switching cycle, to stabilize the power supply voltage within a specified range. This ensures stability of the power supply voltage. When it is determined that the power supply voltage increases, the switch may decrease a ratio of the turn-on time to the turn-off time of the line between the power supply loop and the heating resistor in the switching cycle, to stabilize the power supply voltage within a specified range. This ensures stability of the power supply voltage.

In some embodiments of this application, when it is determined that an ambient temperature of the energy storage apparatus increases, the switch may decrease a ratio of the turn-on time to the turn-off time of the line between the power supply loop and the heating resistor in the switching cycle, and finally an effect of decreasing the average heating power through adjustment can be achieved. When it is determined that an ambient temperature of the energy storage apparatus decreases, the switch may increase a ratio of the turn-on time to the turn-off time of the line between the power supply loop and the heating resistor in the switching cycle, and finally an effect of increasing the average heating power through adjustment can be achieved.

In some embodiments of this application, the switch may control a frequency of each switching cycle to be fixed.

In some embodiments of this application, the switch may alternatively control a frequency of each switching cycle to vary, to adjust a total harmonic factor of a voltage and a current in a heating power adjustment process, and reduce physical noise and the like.

In some embodiments of this application, the switch in the heating circuit needs to be a switching transistor that can switch between an on state and an off state at a high frequency. For example, the switch may be one or more of a plurality of types of switching transistors such as a metal-oxide-semiconductor field-effect transistor (metal-oxide-semiconductor field-effect transistor, MOSFET), a bipolar junction transistor (bipolar junction transistor, BJT), and an insulated gate bipolar transistor (insulated gate bipolar transistor, IGBT).

In some embodiments of this application, the energy storage apparatus further includes a controller. The controller is electrically connected to the power supply loop and the switch. The controller is configured to obtain the power supply voltage, generate a switching signal based on the power supply voltage, and control, by using the switching signal, the switch to switch between being on and being off, so that the heating resistor is intermittently connected to and disconnected from the power supply loop, and the average heating power of the heating circuit is dynamically adjusted. The controller may be any one of a microcontroller unit (microcontroller unit, MCU), a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or the like, or may be any one or a combination of another programmable logic device, a transistor logic device, or a hardware component.

In some embodiments of this application, the controller may calculate an adjustment coefficient based on the power supply voltage and a specified reference heating power, and generate the switching signal based on the adjustment coefficient and a carrier signal.

In some embodiments of this application, when it is determined that the power supply voltage increases, and the reference heating power is a fixed value, the controller may control the adjustment coefficient to decrease, so that a duty cycle of the generated switching signal is decreased, to decrease the ratio of the turn-on time to the turn-off time of the line between the power supply loop and the heating resistor in the switching cycle. In this case, the average heating power of the heating circuit fluctuates within the specific numerical range, that is, the average heating power may be considered to be fixed. When it is determined that the power supply voltage decreases, and the reference heating power is the fixed value, the controller may control the adjustment coefficient to increase, so that a duty cycle of the generated switching signal is increased, to increase the ratio of the turn-on time to the turn-off time of the line between the power supply loop and the heating resistor in the switching cycle. In this case, the average heating power of the heating circuit fluctuates within the specific numerical range, that is, the average heating power may be considered to be fixed.

In some embodiments of this application, when it is determined that the reference heating power increases, and the power supply voltage is fixed, the controller may control the adjustment coefficient to increase, so that a duty cycle of the generated switching signal is increased, to increase the ratio of the turn-on time to the turn-off time of the line between the power supply loop and the heating resistor in the switching cycle. In this case, the average heating power of the heating circuit is increased. When it is determined that the reference heating power decreases, and the power supply voltage is fixed, the controller may control the adjustment coefficient to decrease, so that a duty cycle of the generated switching signal is decreased, to decrease the ratio of the turn-on time to the turn-off time of the line between the power supply loop and the heating resistor in the switching cycle. In this case, the average heating power of the heating circuit is decreased.

In some embodiments of this application, when it is determined that the power supply voltage decreases, the controller may control the adjustment coefficient to decrease, so that a duty cycle of the generated switching signal is decreased. In this case, the power supply voltage is stabilized within the specified range. When it is determined that the power supply voltage increases, the controller may control the adjustment coefficient to increase, so that a duty cycle of the generated switching signal is increased. In this case, the power supply voltage is stabilized within the specified range.

In some embodiments of this application, when it is determined that the ambient temperature of the energy storage apparatus increases, the controller may control the adjustment coefficient to decrease, so that a duty cycle of the generated switching signal is decreased, to decrease the ratio of the turn-on time to the turn-off time of the line between the power supply loop and the heating resistor in the switching cycle. In this case, the average heating power of the heating circuit is decreased. When it is determined that the ambient temperature of the energy storage apparatus decreases, the controller may control the adjustment coefficient to increase, so that a duty cycle of the generated switching signal is increased, to increase the ratio of the turn-on time to the turn-off time of the line between the power supply loop and the heating resistor in the switching cycle. In this case, the average heating power of the heating circuit is increased.

The energy storage apparatus provided in embodiments of this application may be widely used in an energy storage system for household energy storage, industrial and commercial energy storage, or power station energy storage. The energy storage apparatus may be further used in a power battery system in the field of power batteries and backup power, and can further implement a battery heating function. This solution may also be applied to an electric tool.

According to a second aspect, this application provides an energy storage system. The energy storage system may include a battery rack including one or more energy storage apparatuses, and a battery control unit. For a specific structure of the energy storage apparatus, refer to the first aspect. There is a communication line between the battery control unit and a controller of each energy storage apparatus. When it is determined that a battery needs to be heated, the battery control unit may indicate the controller of the energy storage apparatus to perform a heating function. In a heating process, a switch may control, based on a power supply voltage, turn-on time and turn-off time of a line between a power supply loop and a heating resistor in each switching cycle, to dynamically adjust an average heating power of a heating circuit.

Further, the energy storage system may further include a power conversion system, an energy management system, a communication system, and the like. Details are not described herein.

For technical effects that can be achieved by any possible design in the second aspect, refer to the technical effects that can be achieved by any possible design in the first aspect. Details are not described herein again. These aspects or other aspects of this application are more readily apparent from the following description of embodiments.

### BRIEF DESCRIPTION OF DRAWINGS

To describe the technical solutions in embodiments of this application or in the background more clearly, the following describes the accompanying drawings for describing embodiments of this application or the background.
FIG. 1 is a diagram of a structure of an energy storage system;
FIG. 2 is a diagram of a structure of a battery rack;
FIG. 3 is a diagram of a structure of a heating circuit in a conventional technical solution;
FIG. 4 is a diagram of a structure of another heating circuit in a conventional technical solution;
FIG. 5 is a diagram of a structure of an energy storage apparatus according to an embodiment of this application;
FIG. 6 is a diagram of a structure of a heating circuit in an energy storage apparatus according to an embodiment of this application;
FIG. 7 is a schematic flowchart of performing heating control by a controller in an energy storage apparatus according to an embodiment of this application;
FIG. 8 is a diagram of generating a switching signal by a comparator in an energy storage apparatus according to an embodiment of this application;
FIG. 9 is a diagram of generating a switching signal with a fixed frequency in an energy storage apparatus according to an embodiment of this application;
FIG. 10 is a diagram of generating a switching signal with a variable frequency in an energy storage apparatus according to an embodiment of this application; and
FIG. 11 is a diagram of a control sequence of a switch in an energy storage apparatus according to an embodiment of this application.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include forms such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

In addition, identical reference numerals in the accompanying drawings represent identical or similar structures. Therefore, repeated description thereof is omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

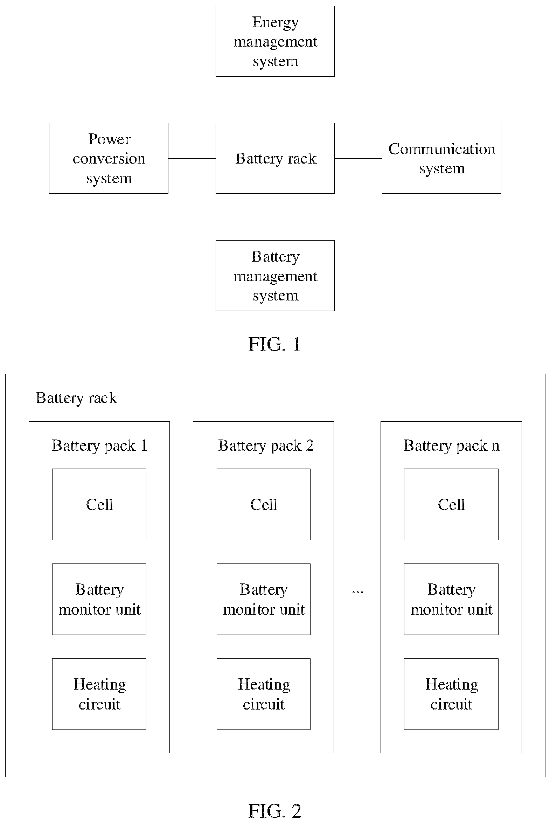

Refer to FIG. 1. A conventional energy storage system usually includes a battery rack, a battery management system, a power conversion system, an energy management system, a communication system, and the like. Refer to FIG. 2. The battery rack may specifically include one or more battery packs (packs). The battery pack usually includes a cell, a battery monitor unit (battery monitor unit, BMU), a heating circuit, and the like. The battery management system may specifically include a battery monitor unit and a battery control unit (battery control unit, BCU). The battery control unit may control the battery monitor unit to monitor the cell. In a low-temperature environment, a power characteristic of a battery deteriorates, a cycle life of the battery decreases, and an available capacity of the battery decreases. In particular, when the battery is charged in the low-temperature environment, a loss of the battery is large, and the battery needs to be heated when necessary. This part of operation is completed by the heating circuit. The battery is usually heated by a heating resistor disposed outside the cell, so that a temperature of the battery is increased, and a charging speed and a discharging capability of the battery are improved.

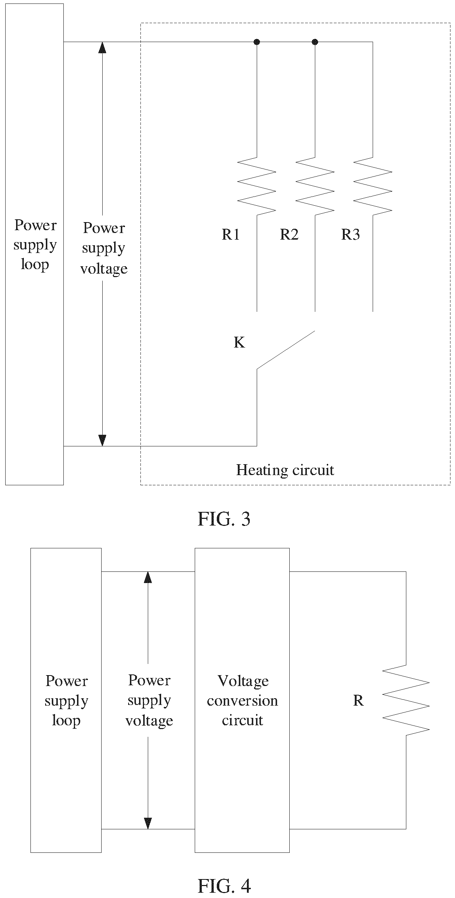

In a conventional technical solution, refer to FIG. 3. A plurality of heating resistors R1, R2, and R3 having different resistance values may be disposed in the heating circuit. The plurality of heating resistors R1, R2, and R3 are disposed in parallel and connected to a power supply loop after being connected in series to a selection switch K. In scenarios with different heating power requirements, the selection switch K is controlled to switch the heating resistors R1, R2, and R3 having the corresponding resistance values, to meet the heating power requirements. In this design manner, it may be difficult to adapt a resistor model to the power supply loop. This increases difficulty of selection and switching through the selection switch K and maintenance costs. A problem that a heating power cannot be smoothly adjusted is caused, and the heating power is affected by a fluctuation of a power supply voltage. In addition, when the power supply voltage is low, the heating circuit further pulls down the power supply voltage. This affects normal operation of the power supply loop.

In another conventional technical solution, refer to FIG. 4. A voltage conversion circuit is added between a heating resistor R and a power supply loop, and a specific voltage is provided for the heating resistor after the voltage conversion circuit performs voltage conversion on a power supply voltage provided by the power supply loop. In this design manner, although a heating power can be smoothly adjusted, the additional voltage conversion circuit increases costs.

To overcome disadvantages of the foregoing conventional technical solutions, this application provides an energy storage apparatus and an energy storage system. In a new heating control manner, various heating resistors and any dynamically changing power supply voltage can be adapted, to implement a function of dynamically adjusting the heating power.

The following describes in detail the energy storage apparatus and the energy storage system that are provided in this application with reference to the accompanying drawings.

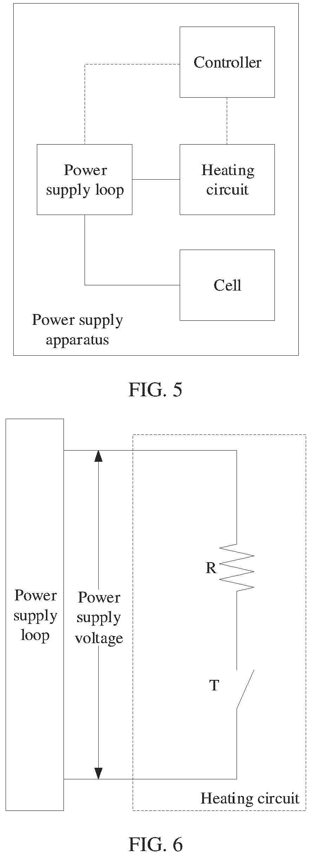

FIG. 5 is a diagram of a structure of an example of an energy storage apparatus according to an embodiment of this application. FIG. 6 is a diagram of a structure of an example of a heating circuit in an energy storage apparatus according to an embodiment of this application.

Refer to FIG. 5 and FIG. 6. In embodiments of this application, the energy storage apparatus may specifically include a cell and a heating circuit, the heating circuit includes a heating resistor R and a switch T, and the heating resistor R and the switch T are connected in series to a power supply loop. The power supply loop may be a power conversion system connected to the cell, or may be another power supply loop that is in the energy storage apparatus and that is connected to the cell. The power supply loop is configured to provide a power supply voltage. The power supply loop may be located outside the energy storage apparatus, or may be located inside the energy storage apparatus. An example in which the power supply loop is located inside the energy storage apparatus is used for description in FIG. 6. A voltage value of the power supply voltage provided by the power supply loop varies based on different connection line positions of the heating circuit in the power conversion system or the another power supply loop. The power supply voltage provided by the power supply loop may be a fixed value, or may vary due to another factor. The switch T in the heating circuit needs to be a switching transistor that can switch between an on state and an off state at a high frequency. For example, the switch T may be one or more of a plurality of types of switching transistors such as a metal-oxide-semiconductor field-effect transistor (metal-oxide-semiconductor field-effect transistor, MOSFET), a bipolar junction transistor (bipolar junction transistor, BJT), and an insulated gate bipolar transistor (insulated gate bipolar transistor, IGBT). The switching transistors are not enumerated in embodiments of this application. The switch T in the heating circuit is controlled to be on and off, so that the heating resistor R is intermittently connected to and disconnected from the power supply loop. Specifically, the switch T may control, based on the power supply voltage provided by the power supply loop, turn-on time and turn-off time of a line between the power supply loop and the heating resistor R in each switching cycle, to dynamically adjust an average heating power of the heating circuit.

In embodiments of this application, the energy storage apparatus may further include a controller. The controller is electrically connected to the power supply loop and the switch T. The controller may obtain the power supply voltage, generate a switching signal based on the power supply voltage, and control, by using the switching signal, the switch to switch between being on and being off, so that the heating resistor R is intermittently connected to and disconnected from the power supply loop, and the average heating power of the heating circuit is dynamically adjusted. For example, the controller may be any one of a microcontroller unit (microcontroller unit, MCU), a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or the like, or may be any one or a combination of another programmable logic device, a transistor logic device, or a hardware component.

Refer to FIG. 5. In some embodiments of this application, the energy storage apparatus may further include a battery monitor unit. The controller may be integrated into the battery monitor unit, or may be independently disposed, or may be integrated into another component.

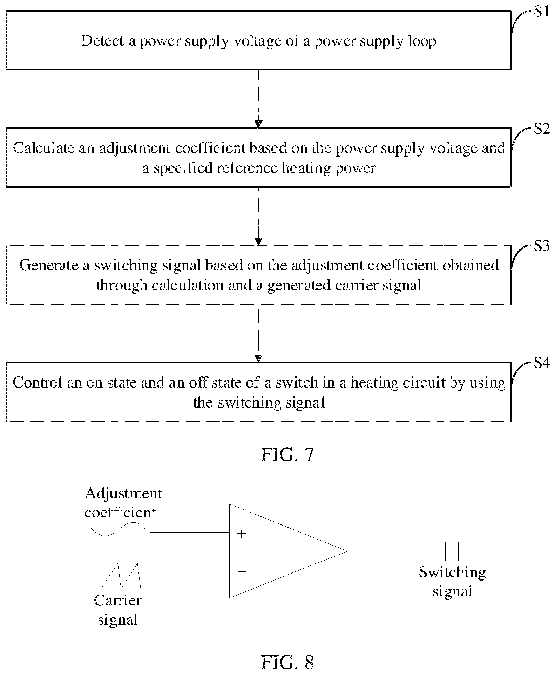

FIG. 7 is a schematic flowchart of an example of performing heating control by a controller in an energy storage apparatus according to an embodiment of this application.

Refer to FIG. 7. In embodiments of this application, a specific process in which the controller controls an on state and an off state of a switch T in a heating circuit is as follows, and may include the following steps.

S 1: Detect a power supply voltage of a power supply loop.

For example, the power supply voltage may be obtained by using a voltage sensor. In addition, the obtained power supply voltage may be a fixed value, or may be a variable value.

S2: Calculate an adjustment coefficient based on the power supply voltage and a specified reference heating power.

For example, the specified reference heating power may be a fixed value, or may be a variable value. The adjustment coefficient obtained through calculation varies based on impact factors. The impact factors include but are not limited to the specified reference heating power, the power supply voltage, an ambient temperature, and the like. A specific relationship between the adjustment coefficient and the impact factors is shown in Table 1.

**Table 1**

| | Strong source case | Weak Source case |
|---|---|---|
| Power supply voltage increases | Adjustment coefficient decreases | Adjustment coefficient increases |
| Power supply voltage decreases | Adjustment coefficient increases | Adjustment coefficient decreases |
| Reference heating power increases | Adjustment coefficient increases | Adjustment coefficient increases |
| Reference heating power decreases | Adjustment coefficient decreases | Adjustment coefficient decreases |
| Ambient temperature increases | Adjustment coefficient decreases | Adjustment coefficient decreases |
| Ambient temperature decreases | Adjustment coefficient increases | Adjustment coefficient increases |

S3: Generate a switching signal based on the adjustment coefficient obtained through calculation and a generated carrier signal.

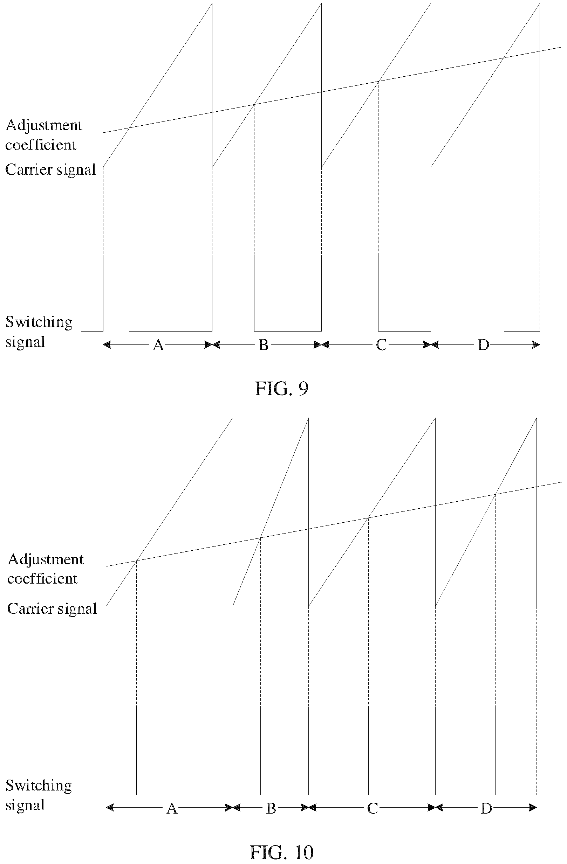

FIG. 8 is a diagram of an example of generating a switching signal by a comparator in an energy storage apparatus according to an embodiment of this application. FIG. 9 is a diagram of an example of generating a switching signal with a fixed frequency in an energy storage apparatus according to an embodiment of this application. FIG. 10 is a diagram of an example of generating a switching signal with a variable frequency in an energy storage apparatus according to an embodiment of this application.

Refer to FIG. 8. For example, the adjustment coefficient obtained through calculation may be used as a reference signal, the reference signal and a carrier signal generated by a crystal oscillator are simultaneously input to the comparator, where the comparator may be a digital comparator inside the controller, and a pulse width modulation (pulse width modulation, PWM) signal is output as the switching signal after calculation by the comparator. The carrier signal generated by the crystal oscillator may be a high-frequency sawtooth wave signal, or may be a triangular wave signal. An example in which the carrier signal is the high-frequency sawtooth wave signal is used for description in both FIG. 9 and FIG. 10. In addition, a frequency of the carrier signal may be fixed or may be variable. Refer to FIG. 9. When the frequency of the carrier signal is fixed, switching cycles A, B, C, and D in the generated switching signal have equal duration, that is, a frequency of the switching cycle is fixed. Refer to FIG. 10. When the frequency of the carrier signal varies, duration of each of the switching cycles A, B, C, and D in the generated switching signal varies accordingly, that is, the frequency of the switching cycle varies. The frequency of the switching cycle varies, so that a total harmonic factor of a voltage and a current of the power supply loop can be adjusted in a heating power adjustment process, and physical noise and the like can be reduced.

S4: Control an on state and an off state of a switch in a heating circuit by using the switching signal.

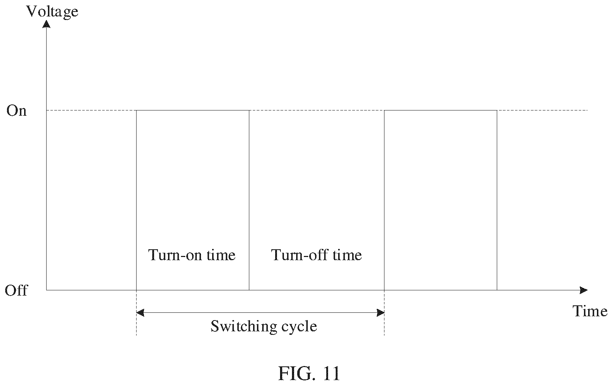

FIG. 11 is a diagram of an example of a control sequence of a switch in an energy storage apparatus according to an embodiment of this application.

For example, the controller may load the switching signal to a control end of the switch T, and the switch T switches between being on and being off based on a duty cycle of the switching signal. Refer to FIG. 11. The duty cycle of the switching signal is positively correlated with a ratio of turn-on time to turn-off time in the switching cycle. In the turn-on time of each switching cycle, the switch T conducts the line between the heating resistor R and the power supply loop, so that the heating resistor performs heating. In the turn-off time of each switching cycle, the switch T cuts off the line between the heating resistor R and the power supply loop, so that the heating resistor stops heating. Intermittent switching of the heating resistor is controlled, so that the average heating power of the heating circuit can be dynamically adjusted to match the specified reference heating power, to meet requirements of different application scenarios.

In some embodiments of this application, in a case in which supply power of the power supply loop is greater than the reference heating power, where this case may be considered as the strong source case, if the specified reference heating power is a fixed value, it is expected that the average heating power of the heating circuit is within a specific numerical range. When a resistance value of the heating resistor R remains unchanged, if the power supply voltage is larger, the adjustment coefficient obtained through calculation needs to be smaller, and accordingly the duty cycle of the switching signal generated by the comparator is smaller, to decrease the turn-on time of the switch in the switching cycle. To be specific, the switch decreases a ratio of the turn-on time to the turn-off time of the line between the power supply loop and the heating resistor R in the switching cycle, so that heating time of the heating resistor R in the switching cycle can be decreased, and finally an effect of adjusting a fluctuation of the average heating power within the specific numerical range may be achieved, that is, the average heating power may be considered to be fixed. Similarly, when the resistance value of the heating resistor R remains unchanged, if the power supply voltage is smaller, the adjustment coefficient obtained through calculation needs to be larger, and accordingly the duty cycle of the switching signal generated by the comparator is larger, to increase the turn-on time of the switch in the switching cycle. To be specific, the switch increases the ratio of the turn-on time to the turn-off time of the line between the power supply loop and the heating resistor R in the switching cycle, so that the heating time of the heating resistor R in the switching cycle can be increased, and finally the effect of adjusting the fluctuation of the average heating power within the specific numerical range may be achieved, that is, the average heating power may be considered to be fixed.

In some other embodiments of this application, when both the power supply voltage and the resistance value of the heating resistor R are fixed values, if the specified reference heating power is larger, that is, it is expected that the average heating power of the heating circuit is larger, the adjustment coefficient obtained through calculation needs to be larger, and accordingly the duty cycle of the switching signal generated by the comparator is larger, to increase the turn-on time of the switch in the switching cycle. To be specific, the switch increases the ratio of the turn-on time to the turn-off time of the line between the power supply loop and the heating resistor R in the switching cycle, so that the heating time of the heating resistor R in the switching cycle can be increased, and finally an effect of increasing the average heating power through adjustment can be achieved. Similarly, when both the power supply voltage and the resistance value of the heating resistor R are fixed values, if the specified reference heating power is smaller, that is, it is expected that the average heating power of the heating circuit is smaller, the adjustment coefficient obtained through calculation needs to be smaller, and accordingly the duty cycle of the switching signal generated by the comparator is smaller, to decrease the turn-on time of the switch in the switching cycle. To be specific, the switch decreases the ratio of the turn-on time to the turn-off time of the line between the power supply loop and the heating resistor R in the switching cycle, so that the heating time of the heating resistor R in the switching cycle can be decreased, and finally an effect of decreasing the average heating power through adjustment can be achieved.

In some other embodiments of this application, the switching signal may alternatively be adjusted based on a change of the ambient temperature. If the ambient temperature of the energy storage apparatus is higher, it indicates that the average heating power of the heating circuit may be smaller, the adjustment coefficient obtained through calculation needs to be smaller, and accordingly the duty cycle of the switching signal generated by the comparator is smaller, to decrease the turn-on time of the switch in the switching cycle. To be specific, the switch decreases the ratio of the turn-on time to the turn-off time of the line between the power supply loop and the heating resistor R in the switching cycle, so that the heating time of the heating resistor R in the switching cycle can be decreased, and finally the effect of decreasing the average heating power through adjustment can be achieved. Similarly, if the ambient temperature of the energy storage apparatus is lower, it indicates that the average heating power of the heating circuit may be larger, the adjustment coefficient obtained through calculation needs to be larger, and accordingly the duty cycle of the switching signal generated by the comparator is larger, to increase the turn-on time of the switch in the switching cycle. To be specific, the switch increases the ratio of the turn-on time to the turn-off time of the line between the power supply loop and the heating resistor R in the switching cycle, so that the heating time of the heating resistor R in the switching cycle can be increased, and finally the effect of increasing the average heating power through adjustment can be achieved.

In some embodiments of this application, as the supply power of the power supply loop varies, the reference heating power varies, and an external condition like the ambient temperature varies, a case in which the reference heating power is larger than the supply power of the power supply loop may occur, where this case may be considered as the weak source case. In this case, as the heating circuit continuously operates, the power supply voltage is pulled down to be less than an undervoltage point set inside the controller, and undervoltage protection is enabled. The power supply voltage may be stabilized in a reverse adjustment manner, to maximize utilization of energy of the power supply loop and ensure stability of the power supply voltage. Specifically, when the power supply voltage is near the undervoltage point set inside the controller, if it is determined that the power supply voltage is less than the undervoltage point, that is, the power supply voltage decreases, the adjustment coefficient is decreased, and accordingly the duty cycle of the switching signal generated by the comparator is decreased, to decrease the turn-on time of the switch in the switching cycle. To be specific, the switch decreases the ratio of the turn-on time to the turn-off time of the line between the power supply loop and the heating resistor R in the switching cycle, so that the heating time of the heating resistor R in the switching cycle can be decreased, the power supply voltage is pulled up properly, and finally the power supply voltage is stabilized in a specific range, to achieve an effect of stabilizing the power supply voltage. If it is determined that the power supply voltage is greater than the undervoltage point, that is, the power supply voltage increases, the adjustment coefficient is increased, and accordingly the duty cycle of the switching signal generated by the comparator is increased, to increase the turn-on time of the switch in the switching cycle. To be specific, the switch increases the ratio of the turn-on time to the turn-off time of the line between the power supply loop and the heating resistor R in the switching cycle, so that the heating time of the heating resistor R in the switching cycle can be increased, the power supply voltage is pulled down properly, and finally the power supply voltage is stabilized in the specific range, to achieve the effect of stabilizing the power supply voltage. In addition, in an adjustment process in the weak source case, if it is determined that the power supply voltage is greater than the undervoltage point set inside the controller by a specific value, it may be considered that the strong source case is met.

The energy storage apparatus provided in embodiments of this application may be widely used in an energy storage system for household energy storage, industrial and commercial energy storage, or power station energy storage. The energy storage apparatus may be further used in a power battery system in the field of power batteries and backup power, and can further implement a battery heating function. This solution may also be applied to an electric tool.

When the energy storage apparatus provided in embodiments of this application is applied to the energy storage system, the energy storage system may include a battery rack including one or more energy storage apparatuses and a battery control unit. There is a communication line between the battery control unit and a controller of each energy storage apparatus. When it is determined that a battery needs to be heated, the battery control unit may indicate the controller of the energy storage apparatus to perform a heating function. In a heating process, a switch may control, based on a power supply voltage, turn-on time and turn-off time of a line between a power supply loop and a heating resistor in each switching cycle, to dynamically adjust an average heating power of a heating circuit.

Further, the energy storage system may further include a power conversion system, an energy management system, a communication system, and the like. Details are not described herein.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An energy storage apparatus, wherein the energy storage apparatus comprises a cell and a heating circuit, the heating circuit comprises a heating resistor and a switch, and the heating resistor and the switch are configured to be connected in series to a power supply loop; and
the switch is configured to control, based on a power supply voltage provided by the power supply loop, turn-on time and turn-off time of a line between the power supply loop and the heating resistor in each switching cycle, to adjust an average heating power of the heating circuit.

2. The energy storage apparatus according to claim 1, wherein
the switch decreases, in response to an increase of the power supply voltage, a ratio of the turn-on time to the turn-off time of the line between the power supply loop and the heating resistor in the switching cycle; or
the switch increases, in response to a decrease of the power supply voltage, a ratio of the turn-on time to the turn-off time of the line between the power supply loop and the heating resistor in the switching cycle.

3. The energy storage apparatus according to claim 1, wherein
the switch increases, based on the fixed power supply voltage, a ratio of the turn-on time to the turn-off time of the line between the power supply loop and the heating resistor in the switching cycle, to increase the average heating power of the heating circuit; or
the switch decreases, based on the fixed power supply voltage, a ratio of the turn-on time to the turn-off time of the line between the power supply loop and the heating resistor in the switching cycle, to decrease the average heating power of the heating circuit.

4. The energy storage apparatus according to claim 1, wherein
the switch decreases, in response to a decrease of the power supply voltage, a ratio of the turn-on time to the turn-off time of the line between the power supply loop and the heating resistor in the switching cycle, to stabilize the power supply voltage within a specified range; or
the switch decreases, in response to an increase of the power supply voltage, a ratio of turn-on time to the turn-off time of the line between the power supply loop and the heating resistor in the switching cycle, to stabilize the power supply voltage within a specified range.

5. The energy storage apparatus according to claim 1, wherein
the switch decreases, in response to an increase of an ambient temperature of the energy storage apparatus, a ratio of the turn-on time to the turn-off time of the line between the power supply loop and the heating resistor in the switching cycle; or
the switch increases, in response to a decrease of an ambient temperature of the energy storage apparatus, a ratio of the turn-on time to the turn-off time of the line between the power supply loop and the heating resistor in the switching cycle.

6. The energy storage apparatus according to any one of claims 1 to 5, wherein the switch controls a frequency of each switching cycle to be fixed.

7. The energy storage apparatus according to any one of claims 1 to 5, wherein the switch controls a frequency of each switching cycle to vary.

8. The energy storage apparatus according to any one of claims 1 to 7, wherein the switch is a bipolar junction transistor BJT, an insulated gate bipolar transistor IGBT, or a metal-oxide-semiconductor field-effect transistor MOSFET.

9. The energy storage apparatus according to any one of claims 1 to 8, further comprising: a controller, wherein the controller is configured to obtain the power supply voltage, and generate a switching signal based on the power supply voltage; and the switching signal is used to control the switch to switch between being on and being off.

10. The energy storage apparatus according to claim 9, wherein the controller is configured to calculate an adjustment coefficient based on the power supply voltage and a specified reference heating power, and generate the switching signal based on the adjustment coefficient and a carrier signal.

11. An energy storage system, comprising a battery rack and a battery control unit, wherein the battery rack comprises one or more energy storage apparatuses according to any one of claims 1 to 10, and the battery control unit is configured to indicate the energy storage apparatus to perform a heating function.
